# EUROPÄISCHE PATENTANMELDUNG

(11) **EP 2 854 264 A2**
(43) Veröffentlichungstag der Anmeldung: **01.04.2015**
(21) Anmeldenummer: 14003304.4
(22) Anmeldetag: 24.09.2014
(51) Int. Cl.: H02K 16/00, H02K 7/06

(54) **Aktuator mit einem permanent erregten, bürstenlosen Gleichstrommotor**

(30) Priorität: 25.09.2013 DE 102013015950
(71) Anmelder: Diehl BGT Defence GmbH & Co. Kg, 88662 Überlingen (DE)
(72) Erfinder: Kempas, Hagen, DE - 88662 Überlingen (DE)
(74) Vertreter: Diehl Patentabteilung

(57) **Zusammenfassung**

Die Erfindung geht aus von einem Aktuator (14) mit einer Welle (60) und einem mit der Welle (60) verbundenen permanent erregten, bürstenlosen Gleichstrommotor (66) zum rotatorischen Antrieb der Welle (60) relativ zu einer Außeneinheit.

Ein kompakter und starker Gleichstrommotor (66) kann erreicht werden, wenn der Gleichstrommotor (66) zwei mit der Welle (60) verbundene Motoreinheiten (62, 64) mit jeweils einem Läufer (78) mit Permanentmagneten (92) aufweist und bei beiden Motoreinheiten (62, 64) die Anzahl der Permanentmagnetpole gleich der Anzahl der Wicklungspole im Ständer (80, 102) ist.

## Beschreibung

Die Erfindung betrifft einen Aktuator mit einer Welle und einem permanent erregten, bürstenlosen Gleichstrommotor, der zwei an der Welle befestigte und zusammenwirkende Motoreinheiten aufweist zum gemeinsamen rotatorischen Antrieb der Welle relativ zu einer Außeneinheit.

Aktuatoren sind Steuereinheiten, die elektrische Signale in eine Bewegung eines Ansteuerelements umsetzen, sodass diese Bewegung von einer weiteren Einheit genutzt werden kann, beispielsweise für die Steuerung eines Lenkflügels eines Lenkflugkörpers. Die Bewegung des Ansteuerelements kann eine transiatorische und in ihrem Weg begrenzte Bewegung sein. Zur Umsetzung der elektrischen Steuersignale umfassen Aktuatoren in der Regel einen Elektromotor, mit dem die mechanische Bewegung erzeugt und in geeigneter Weise auf das Ansteuerelement übertragen wird.

Häufig besteht das Bedürfnis, Aktuatoren sehr kompakt auszuführen, da eine Vielzahl von Baueinheiten auf begrenztem Raum zusammenwirken. Dennoch soll die Ansteuerbewegung des Ansteuerelements kräftig und präzise sein, sodass eine exakte Steuerung der weiteren Baueinheit und damit eine exakte Systemsteuerung möglich werden. Für eine kompakte, präzise und kräftige Bewegung kann ein permanent erregter, bürstenloser Gleichstrommotor eingesetzt werden, der mit Einer Steuereinheit kommutiert wird, die die Ströme durch die Wicklungen des Gleichstrommotors entsprechend der elektrischen Steuersignale steuert.

Es ist eine Aufgabe der vorliegenden Erfindung, einen Aktuator anzugeben, der kompakt gebaut und präzise in der Bewegungsumsetzung ist.

Diese Aufgabe wird durch einen Aktuator der eingangs genannten Art gelöst, bei dem der Gleichstrommotor erfindungsgemäß zwei mit der Welle verbundene Motoreinheiten mit jeweils einem Läufer mit Permanentmagneten aufweist und bei beiden Motoreinheiten die Anzahl der Permanentmagnetpole gleich der Anzahl der Wicklungspole im Ständer ist.

Die Erfindung geht von der folgenden Überlegung aus: Beim Bau von bürstehlosen Gleichstrommotoren ist es bei der Konfiguration des Dauermagnetsystems wichtig, eine hohe magnetische Durchflutung zu erzielen. Andererseits sind geringe Reluktanzmomente anzustreben, um Nutrastmomente klein zu halten. Diese Anforderungen werden von speziellen Teilungsverhältnissen von Statomuten und Magnetpolen der Permanentmagnete erreicht. Allgemein wird durch eine höhere Nutzahl bzw. Zahl der Wicklungspole gegenüber der Magnetpolzahl das Nutrastmoment klein gehalten. Weitere Verbesserungen werden durch eine geeignete geometrische Auslegung der Permanentmagneten, der Nuten und der Polschuhe erreicht.

Das Teilungsverhältnis der größeren Nutzahl bedingt jedoch auch eine kleinere Polpaarzahl bei gleichem Durchmesser, um die Nutanzahl nicht unpraktisch groß werden zu lassen. Der Stator muss bei weniger Magnetpolpaaren jedoch einen größeren magnetischen Fluss je Polpaar führen, was einen dickeren Rückschluss erfordert. Des Weiteren können bei relativ hohen Nutrastfrequenzen, also Nutrastmomente pro Umdrehung, schon kleine Unsymmetrien, zum Beispiel bei den Magneten oder Nutspalten, erhebliche Momentenstörungen bewirken. Um diese gering zu halten ist es bekannt, schräge Nuten im Stator zu verwenden, durch die die Zuordnung vom Stator zu den Magnetpolen magnetisch etwas verschleift wird.

Bei gleicher Nut- und Magnetpolzahl der Permanentmagnete ist ein Motorbetrieb aufgrund des sehr starken Reluktanzmoments und der magnetischen Polstellen nicht möglich. Diese grundsätzliche Unmöglichkeit kann jedoch umgangen werden, wenn zwei Motoreinheiten zusammenwirkend eingesetzt werden. So enthält der erfindungsgemäße Gleichstrommotor zwei mit der Welle verbundene Motoreinheiten, die jeweils auf die Welle wirken. Hierbei ist eine starre Kopplung der beiden Läufer der beiden Motoreinheiten vorteilhaft, weil hierdurch die starken Reluktanzmomente der einzelnen Motoreinheiten gegeneinander geführt werden können. Das Gesamt-Reluktanzmoment kann verringert und die beiden Motoreinheiten können mit gleicher Anzahl von Permanentmagnetpolen und Wicklungspolen im Ständer betrieben werden. Hierdurch kann erreicht werden, dass bauartbedingte Toleranzen nur zu geringen Momentenstörungen beitragen, da das Moment eines einzelnen Magnets durch die Mittelungswirkung aller Polpaare deutlich reduziert wird. Eine Schrägung der Nuten ist daher auch nicht erforderlich. Als Ergebnis kann ein ruhig laufender und kompakter Gleichstrommotor erreicht werden.

Weiter besteht die Möglichkeit, gegenüber einem vergleichbaren Motor die Polpaarzahl zu erhöhen. Hierdurch kann bei gleichem Statorvolumen die Nutquerschnitfsfläche vergrößert werden, ohne den Stator in die magnetische Sättigung zu bringen. Außerdem kann bei gleich bleibender Polpaarzahl die Anzahl der Nuten reduziert werden, wodurch der Wicklungsaufwand verkleinert werden kann. Weiter ist es möglich, bei gleicher Anzahl von Nuten und Magneten ein einfaches Wickelschema zu verwenden. Der Gleichstrommotor kann daher im Antrieb kräftig und einfach in der Herstellung gehalten bleiben.

Die beiden Motoreinheiten sind jeweils permanent erregte und bürstenlose Einheiten. Zusammen bilden sie den Gleichstrommotor, der von einer Steuereinheit kommutiert wird. Die Steuereinheit steuert beide Motoreinheiten in einem gemeinsamen Steuerungsprozess. Über die zweckmäßige Zwangskopptung der Läufer der beiden Motoreinheiten über die Welle stehen die Läufer in einem festen Rotationsverhältnis zueinander. Außerdem ist es zweckmäßig, wenn die Läufer mittelbar oder unmittelbar nebeneinander an der Welle angeordnet sind. Die Außeneinheit kann ein Gehäuse des Aktuators sein. Grundsätzlich ist es jedoch auch möglich, dass die Außeneinheit der Läufer ist und die Welle den Ständer der beiden Motoreinheiten trägt.

Vorteilhafterweise sind Ständer und Läufer der beiden Motoreinheiten gleich, insbesondere sind die beiden Motoreinheiten identisch zueinander ausgeführt. Weiter ist es vorteilhaft, wenn der Gleichstrommotor ein Synchronmotor ist.

Ein Wicklungspol kann durch eine Einzelwicklung oder durch einen Teil einer größeren Wichtung entstehen. Zweckmäßigerweise ist die Anzahl der Wicklungspole doppelt so hoch wie die Polpaarzahl des Ständers. Die Zahl der Permanentmagnetpole kann gleich der Zahl der Permanentmagnete sein, die im Läufer angeordnet sind. Zweckmäßigerweise sind die Permanentmagnetpole im Läufer und/oder die Wicklungspole im Ständer äquidistant über den Umfang von Läufer bzw. Ständer verteilt.

In einer vorteilhaften Ausführungsform der Erfindung sind die Motoreinheiten identisch zueinander ausgeführt und alle Permanentmagneten einer der Motoreinheiten liegen jeweils einer Nut im Ständer fluchtend gegenüber. Hierdurch kann ein gleichmäßiges Nutrastmoment der entsprechenden Motoreinheit erreicht werden, das durch das Reluktanzverhalten der anderen Motoreinheit zumindest weitgehend ausgeglichen werden kann.

Weiter ist es vorteilhaft, wenn die Läufer der beiden Motoreinheiten ein Viertel Polpaarteilung versetzt zueinander angeordnet sind. Hierbei ist es zweckmäßig, wenn ein Polpaar durch zwei Wicklungen, Polschuhe beziehungsweise Nuten gebildet wird. Durch diese Versetzung zueinander können die Reluktanzmomente der beiden Motoreinheiten in der Weise gut gegeneinander wirken, dass das Gesamtreluktanzmoment gering ist. Zweckmäßigerweise sind die Läufer der beiden Motoreinheiten so zueinander angeordnet, dass wenn die Permanentmagnete eines Läufers genau gegenüber den Wicklungen des Stators liegen, die Permanentmagnete des anderen Läufers mittig zwischen den Wicklungen des anderen Stators liegen.

Die Herstellung des Stators kann erheblich vereinfacht werden, wenn der Gleichstrommotor ein Zweiphasenmotor ist und die beiden Motoreinheiten jeweils nur ein einphasiges Wicklungssystem aufweisen. Jeder Motor ist insofern eine einphasige Motoreinheit, wobei auf jeder Motoreinheit nur eine Phase vorhanden ist.

Weiter ist es vorteilhaft, wenn der Gleichstrommotor eine Steuerung aufweist, beispielsweise eine Steuereinheit, die dazu vorbereitet ist, die beiden Motoreinheiten abwechselnd aus jeweils einer Phase anzusteuern. Hierdurch können die beiden Motoreinheiten zu einem Motor zusammengeführt werden und gemeinsam mit kleinem Reluktanzmoment die Welle antreiben.

Generell ist es vorteilhaft, wenn die Motoreinheiten so aufeinander abgestimmt sind, dass ihre Reluktanzmomente bei unbestromten Ständern gegeneinander wirken. Die jeweiligen Reluktanzmomente können sich zumindest teilweise aufheben, sodass ein geringeres Gesamtreluktanzmoment entsteht. Zweckmäßigerweise ist ein resultierendes Reluktanzmoment im Wesentlichen Null. Dies kann durch eine entsprechende Ausgestaltung der Ständer- und Läufergeometrie in einfacher, dem Fachmann geläufiger Weise erreicht werden.

Zum Erreichen eines geringen oder verschwindenden Gesamt-Reluktanzmoments ist es vorteilhaft, wenn die Reluktanzmomente der beiden Motoreinheiten zumindest im Wesentlichen sinusförmig verlaufen. Generell ist es vorteilhaft, wenn der Reluktanzmomentverlauf so ist, dass zwei identische Verläufe phasenversetzt zueinander ein möglichst geringes Gesamtmoment erzeugen. Dies kann mit einem Rechteckvenauf mit gleich langen Bergen und Tälern ebenso erreicht werden, wie mit anderen symmetrischen Kurvenverläufen. Besonders tolerant gegen Ungenauigkeiten ist hierbei jedoch ein sinusförmiger Verlauf, der im Fall dieser Ausführungsform der Erfindung anzustreben ist. Die Frequenz dieses Verlaufs beträgt zweckmäßigerweise 2π pro Pol.

Die Herstellung des Gleichstrommotors kann einfach gehalten werden, wenn die Wicklungen einfach zu wickeln sind. Dies kann besonders gut bei Einzelpotwicklungen der Ständer der Breitenmotoreinheiten erreicht werden. Jede Wicklung ist hierbei nur um einen einzelnen Pol, beispielsweise Polschuh, geführt. Die Wicklungen einer Motoreinheit können hierbei insgesamt parallel angesteuert werden.

Es besteht weiter die Möglichkeit, die Wicklungen polschuhlos auszuführen, sodass die Ständer polschuhlose Ständer sind. Ein solcher ungenuteter Ständer erzielt zwar eine etwas reduzierte Leistung, kann jedoch durch eine höhere automatische Vorfertigung eine weitere Kostenreduzierung bei der Wicklung ermöglichen. Der Ständer kann hierdurch einfacher und damit kostengünstiger gestaltet sein. Je nach Geometrie des Ständers kann auch ein vollständiges Fehlen von Reluktanzmomenten erreicht werden, das für Sonderanwendungen ebenfalls von Bedeutung sein kann.

Eine weitere Möglichkeit einer besonders einfachen Fertigung kann dadurch erreicht werden, dass die Ständer der beiden Motoreinheiten jeweils eine Mäanderwicklung aufweisen, die entlang aller Polschuhe des betreffenden Ständers geführt ist. Eine einzige Wicklung bildet hierbei mehrere Ständerpole, die jedoch nicht durch vollständiges Umwickeln, sondern nur durch teilweises Umgreifen gebildet werden. Sowohl die Mäanderwicklung als auch die Einzelpolwicklungen mit oder ohne Polschuh, können zu einem sehr kleinen und einfachen Wickelkopf führen, da die Wicklung nicht wie sonst bei niedrigpoligen Maschinen üblich über mehrere Nuten geführt muss. Die aufwändigen Arbeiten zum Formen und Isolieren der Wickelköpfe können hierbei erheblich vereinfacht werden beziehungsweise entfallen.

Die Erfindung ist sehr variabel und erlaubt eine Vielzahl von möglichen und vorteilhaften Motorgeometrien. In einer solchen vorteilhaften Geometrie ist die Welle eine Hohlwelle. Der Innenraum der Hohlwelle kann für verschiedene Anwendungen nutzbar sein.

Ein weiteres vorteilhaftes Anwendungsbeispiel der Erfindung liegt darin, dass der Aktuator ein Spindelaktuator mit einem Gehäuse, einer axial beweglichen Spindel und einer axial gehäusefesten Spindelmutter ist, Hierbei ist zumindest einer der beiden Motoreinheiten ein Hohlwellenmotor, zweckmäßigerweise sind beide Motoreinheiten als Hohlwellenmotor beziehungsweise Hohlwellenmotorteil ausgeführt.

Besonders kompakt kann die Einheit gehalten werden, wenn die Spindel in den Innenraum der Motoreinheit beziehungsweise der Motoreinheiten einfahrbar ist. Im eingefahrenen Zustand der Spindel ist diese zweckmäßigerweise zumindest teilweise im Innenraum des Hohlwellenmotors angeordnet. Zum Bewirken eines Hubs kann die Spindel aus dem Innenraum zumindest teilweise herausgefahren werden. Der Motor beziehungsweise zweckmäßigerweise beide Motoreinheiten sind um den Innenraum herum angeordnet, insbesondere symmetrisch um die Spindelachse herum. Der Innenraum der Hohlwelle kann hierbei durch ein Rotorgehäuse gebildet sein, das den Rotor nach innen begrenzt.

Weiter ist die Erfindung gerichtet auf ein Verfahren zum Betreiben eines Aktuators mit einer Welle und einem permanenterregten bürstenlosen Gleichstrommotor, bei dem der Gleichstrommotor von einer Steuereinheit kommutiert wird und die Welle relativ zu einer Außeneinheit rotatorisch antreibt.

Es wird vorgeschlagen, dass die Steuereinheit erfindungsgemäß die Wicklungen von zwei an der Welle befestigten und zusammenwirkenden Motoreinheiten des Gleichstrommotors abwechselnd nur aus je einer Phase ansteuert. Beide Motoreinheiten weisen hierbei jeweils einen eigenen Läufer auf, wobei jeder Läufer ausschließlich aus einer Phase angesteuert wird. Zweckmäßigerweise werden die beiden Läufer wechselnd angesteuert.

Weiter ist es vorteilhaft wenn die Motoreinheiten sensorgesteuert kommutiert werden. Hierdurch kann eine präzise, kompakte und Lebensdauer erhaltende Kommutierung erreicht werden. Zweckmäßigerweise ist die Welle eine Hohlwelle. Diese kann an einem Ende einen Rotationssensor tragen, der die Drehposition der Welle abtastet und das Ergebnis an die Steuereinheit gibt. Diese kann die Drehposition zur Kommutierung verwenden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit der erfindungsgemäßen Vorrichtung und dem erfindungsgemäßen Verfahren gemäß den unabhängigen Ansprüchen kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine schematische Darstellung eines Lenkflugkörpers,
- FIG 2: einen Spindelaktuator an einer Achse eines Lenkflügel des Lenkflugkörpers aus FIG 1,
- FIG 3: einen Längsschnitt durch den Spindelaktuator aus FIG 2 mit zwei Motoreinheiten,
- FIG 4: jeweils einen Querschnitt durch die beiden Motoreinheiten,
- FIG 5: eine perspektivische Sicht auf einen Ständer einer der Motoreinheiten mit Einzelpolwicklungen,
- FIG 6: eine perspektivische Darstellung einer Mäanderwicklung und
- FIG 7: eine perspektivische Sicht auf einen Ständer einer der Motoreinheiten mit Wicklungen ohne Polschuhe.

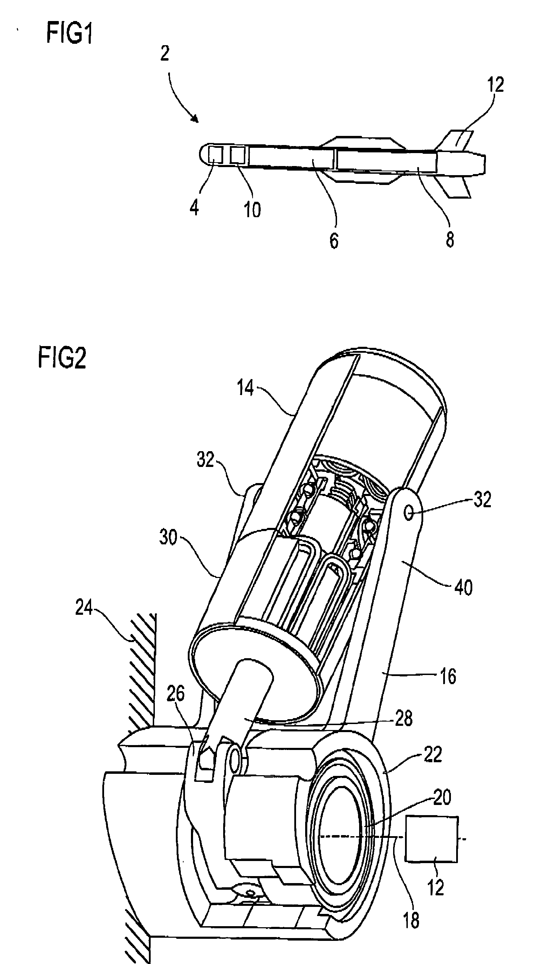

FIG 1 zeigt einen Lenkflugkörper 2 mit einem Suchkopf 4, einem Wirkteil 6 und einem Raketentriebwerk 8. Der Suchkopf 4 ist mit einem Lenksystem 10 verbunden, dessen Elektronik aus optischen Informationen aus der Optik des Suchkopfs 4 Lenksignale zum Lenken des Lenkflugkörpers 2 erzeugt. Unter Verwendung der Lenksignale werden Lenkflügel 12 des Lenksystems 10 verstellt, sodass der Lenkflugkörper 2 bei seinem Flug durch die Luft gelenkt wird.

Die Anlenkung eines der Lenkflügel 12 ist in FIG 2 dargestellt. FIG 2 zeigt einen Aktuator 14 des Lenksystems 10 an einer Aktionseinheit 16, die im dargestellten Ausführungsbeispiel ein Träger einer in FIG 2 nur schematisch angedeuteten Welle 18 des Lenkflügels 12 des Lenkflugkörpers 2 ist. Die Welle 18 ist in einer Aufnahme 20 gelagert, die in einem gehäusefesten Element 22 der Aktionseinheit 16 angeordnet ist, wobei gehäusefest in diesem Zusammenhang die unbewegliche Befestigung relativ zum Flugkörpergehäuse 24 beschreibt, das in FIG 2 nur schematisch angedeutet ist. Die Aufnahme 20 ist drehbar im gehäusefesten Element 22 angeordnet und unbeweglich an einem Hebel 26 befestigt, der wiederum an einem Ansteuerelement 28 des Aktuators 14 befestigt ist. Das Ansteuerelement 28 ist axial beweglich zu einem Gehäuse 30 des Aktuators 14 und ist als Schubstange 72 mit einer vorderen Befestigungseinheit zur Befestigung am Hebel 26 ausgeführt.

Bei einer Betätigung des Aktuators 14 wird das Ansteuerelement 28 in axialer Richtung aus dem Gehäuse 30 herausgeschoben oder eingezogen und dreht auf diese Weise den Hebel 26, der sich auf einer Kreisbahn um die Drehachse der Welle 18 des Lenkflügels 12 bewegt. Hierdurch wird auch der Lenkflügel 12 in seiner Position gedreht, sodass der Lenkflugkörper 2 in seinem Flug gelenkt wird. Durch die Drehbewegung des Hebels 26 wird die Achse des Ansteuerelements 28 trotz der an sich geradlinigen Translationsbewegung des Ansteuerelements 28 etwas verkippt. Um diese Verkippung zuzulassen, ist der Aktuator 14 in zwei Drehlagern 32 der Aktionseinheit 16 gelagert, wobei die Rotationsachse des Drehlagers 32 senkrecht zur Achse des Ansteuerelements 28 ausgerichtet ist. Hierdurch kann der Aktuator 14 ein durch die Drehbewegung des Hebels 26 bewirktes Verkippen leicht nachvollziehen.

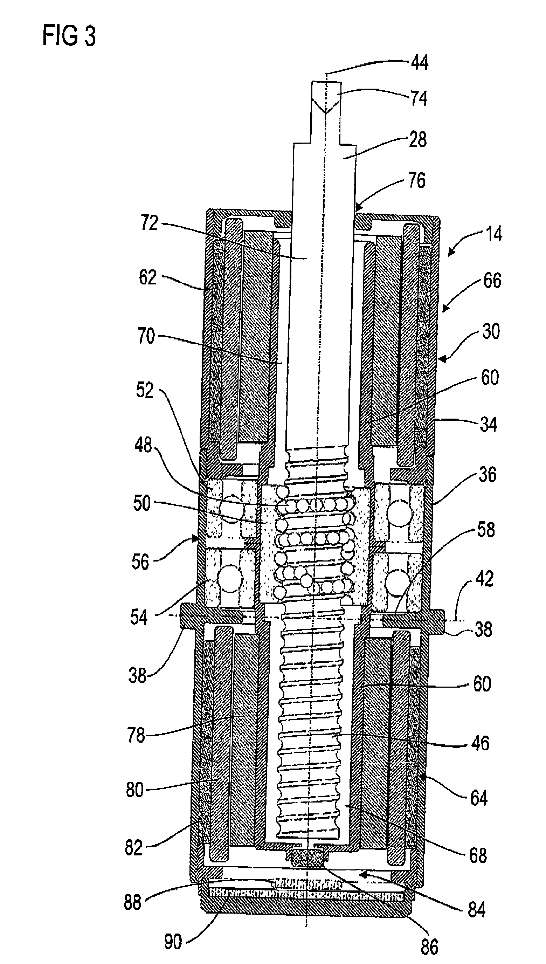

Die inneren Elemente des Aktuators 14 sind in FIG 3 in einem Längsschnitt durch den Aktuator 14 dargestellt, der als Spindelaktuator ausgeführt ist. Das Gehäuse 30 des Aktuators 14 umfasst zwei Gehäuseteile 34, 36, die ineinander gesteckt sind. Am hinteren Gehäuseteil 36 sind zwei als Aufnahmezapfen ausgeführte Befestigungsmittel 38 angeordnet, die jeweils Teil des Drehlagers 32 sind und in einer Ausnehmung der beiden Haltehebel 40 der Aktionseinheit 16 angeordnet sind. Durch diese Aufnahmezapfen ist der Aktuator 14 um die Drehachse 42 rotierbar. Die Drehachse 42 steht senkrecht zu einer Spindelachse 44 einer Spindel 46. Die Spindel 46 ist einstückig gefertigt mit dem Ansteuerelement 28, das als Schubstange ohne Gewinde ausgeführt ist. Im Spindelbereich trägt die Spindel 46 ein Gewinde, das zum Aufnehmen von Kugeln 48 vorbereitet ist. Diese Kugeln 48 greifen in das Außengewinde der Spindel 46 und ein Innengewinde einer Spindelmutter 50 ein, die als Kugelumlaufmutter ausgeführt ist.

Radial direkt außerhalb der Spindelmutter 50 sind zwei Lagereinheiten 52, 54 eines Spindellagers 56 angeordnet, das die Spindelmutter 50 im Gehäuse 30 lagert. Beide Lagereinheiten 52, 54 sind als Schrägschulterlager ausgeführt und so zueinander angeordnet, dass sie ein X-Lager für die Spindelmutter 50 bilden. Dieses Lager 56 ist sehr tolerant gegen ein Verkippen der Spindel 46 relativ zur Gehäuseachse des Gehäuses 30, sodass ein solches Verkippen nur ein geringes Verkippmoment vom Spindellager 56 auf die Spindelmutter 50 ausübt.

Direkt unmittelbar neben dem Spindellager 56 sind die Befestigungsmittel 38 beziehungsweise Aufnahmezapfen als Verlängerung einer nach innen ragenden Gehäuseversteifung 58 ausgeführt, die als Innenrippe ausgeführt ist. Zur leichteren Montierbarkeit sind beide Lagereinheiten 52, 54 an der gleichen Seite der Innenrippe angeordnet, sodass beide Lagereinheiten 52, 54 von einer Seite und gleichzeitig verspannt werden können. Die Lagereinheiten 52, 54 sind als Kugellager ausgeführt mit einer äußeren Lagerschale, die gehäusefest und unmittelbar am Gehäuse 30 von innen anliegt. Der innere und zum Gehäuse 30 bewegliche Lagerring liegt an einer tubusförmigen Welle 60 an, die die Hohlwelle einer Motoreinheit 62, 64 ist. Vorderer und hinterer Hohlwellenteil 60 bilden einen Gesamttubus bzw. eine Hohlwelle, in der die Spindelmutter 50 gelagert ist. Die Spindelmutter 50 ist also über die Hohlwelle an den inneren Lagerschalen des Spindellagers 56 befestigt und mit diesen rotierbar.

Die beiden Motoreinheiten 62, 64 sind jeweils Teil eines Gleichstrommotors 66, der als Hohlwellenmotor ausgeführt ist. Hierbei sind beide Motoreinheiten 62, 64 jeweils ergänzende Hohlwellenmotoreinheiten, die auf jeweils einem eigenen Hohlwellenteil aufgebracht sind. Die Hohlwellenteile 60 bilden hierbei Innengehäuse, die einen Innenraum 68, 70 umschließen, in die die Spindel 46 eingeführt ist.

FIG 3 zeigt die Spindel 46 in einem maximal eingefahrenen Zustand, bei dem der hintere Teil der Spindel 46 den hinteren Innenraum 68 im Wesentlichen vollständig durchgreift. Der vordere Teil der Spindel 46 ragt in den vorderen Innenraum 70 und durchgreift auch diesen mit der Schubstange 72. Die Spindel 46 ist rotierbar und axial beweglich in der Spindelmutter 50 gehalten und außerdem in einer Ankopplung 74 an dem Ruder-Hebel 26 rotationsfest gehalten. Eine Drehung der Spindelmutter 50 bewirkt somit, dass die Spindelmutter 50 um die Spindel 46 herumgeschraubt wird, wobei sich die Spindel 46 nicht selbst dreht, sondern nur axial, also in der Richtung der Spindelachse 44, bewegt. Hierbei fährt die Schubstange 72 durch ein Gleitlager 76 am vorderen Ende des Gehäuses 30. Dieses Gleitlager 76 bildet eine Öffnung des Gehäuses 30, durch das die Schubstange 72 hindurchgeführt ist, und schließt das vordere Ende des Gehäuses 30 bei hindurch geführter Schubstange 72 staubdicht nach außen ab. Hierdurch ist der Innenraum des Gehäuses 30 und vor allem die Spindelmutter 50 vor äußeren Einflüssen geschützt, insbesondere die in ihr gelagerten Kugeln 48.

Die beiden Motoreinheiten 62, 64 sind als bürstenlose Gleichstrommotoren ausgeführt, und zwar als dauermagneterregte Synchronmotoren. Diese umfassen jeweils einen Läufer 78, der mit Permanentmagneten bestückt ist und an jeweils einem Innengehäuse bzw. der Welle 60 befestigt ist. Der Ständer 80 ist Ober ein Lagerelement 82 am Gehäuse 30 befestigt und trägt eine oder mehrere Wicklungen, die über einen Stromrichter mit Gleichstrom geschaltet werden. Die Läufer 78 des Gleichstrommotors 66 treiben die Spindelmutter 50 über die beiden Innengehäuse an und bewegen somit die Spindel 46 in axialer Richtung.

Die beiden Motoreinheiten 62, 64 sind symmetrisch zur Spindelmutter 50 angeordnet, wobei ihr Abstand der Läufer 78 und ihr gesamtes Läufergewicht symmetrisch um die Spindelmutter 50 verteilt sind. Durch die seitliche Anordnung der Motoreinheiten 62, 64 relativ zur Spindelmutter 50 beziehungsweise zum Spindellager 56 wirkt sich eine thermische Ausdehnung der Motoreinheiten 62, 64 nicht auf die Position der Spindelmutter 50 aus. Lediglich der innenraum 68, 70 wird durch Erwärmung verlängert. Da außerdem die Befestigungsmittel 38 innerhalb der beiden Motoreinheiten 62, 64 angeordnet sind, ist auch die Position der Spindelmutter 50 relativ zur Lage der Drehachse 42 unabhängig von einer Temperaturausdehnung der Motoreinheiten 62, 64.

Da das Spindellager 56 sehr nahe an der Drehachse 42 liegt, wird eine Rotation des Aktuators 14 um die Drehachse 42 nur zu einem sehr geringen Moment auf die Spindelmutter 50 führen. Dieses Moment wird ein Stück weit durch das Gleitlager 76 aufgefangen, das das Gehäuse 30 entlang der Spindel 46 beziehungsweise Schubstange 72 der Spindel 46 führt. Ein Restmoment auf die Spindelmutter 50 wird durch die X-Lagerung der Spindelmutter 50 im Spindellager 46 weich aufgefangen, sodass das resultierende Restmoment auf die Spindelmutter 50 minimal ist.

Die Ruderwinkel der Lenkflügel 12 des Lenksystems 10 müssen sehr genau eingestellt werden. Bei der Bauart des Motors 66 wie im Ausführungsbeispiel kommt außerdem hinzu, dass die Rotorposition für die Kommutierung und Regelung des Motors 66 genau bekannt sein muss. Um dies zu erreichen ist am hinteren Ende des Läufergehäuses des Motors 66 ein Rotationssensor 84 angeordnet. Er enthält einen Winkelgeber 86, der im gezeigten Ausführungsbeispiel als Magnetwinkelgeber ausgeführt ist. Alternativ kann er auch als optischer Winkelgeber oder mechanischer Winkelgeber ausgestaltet sein. Weiter umfasst der Rotationssensor 84 einen Winkelabtaster 88, der gehäusefest am hinteren Ende des Gehäuses 30 befestigt und gegenüber dem Winkelgeber 86 angeordnet ist. Winkelgeber 86 und Winkelabtaster 88 liegen in der Spindelachse 44, die also durch die beiden Elemente 86, 88 hindurch führt.

Der Winkelabtaster 88 ist dazu ausgeführt, die Rotationslage des Winkelgebers 86 zu erkennen. Aus der Rotationslage kann eine an dem Winkelabtaster 88 angeschlossene Steuereinheit 90 auf die axiale Lage der Spindel 46 schließen, wenn der Gang, in dem die Spindel 46 und die Spindelmutter 50 angeordnet ist, bekannt ist. Zur Einstellung der Lage der Spindel 46 in der Spindelmutter 50 ist somit nur eine Grobjustierung nötig, die die Genauigkeit eines Gangs des Kugelgewindes der Spindel 46 haben muss. Anschließend wird die Stellung des Winkelgebers 86 zum Winkelabtaster 88 erfasst, woraus die Feinpositionierung der Spindel 46 ermittelt werden kann.

Die Winkelbestimmung des Lenkflügels 12 bzw. der axialen Lage der Spindel 46 erfolgt über den genau gemessenen Drehwinkel der Spindelmutter 50 und der Addition der Umdrehungen der Spindelmutter 50 bis zum aktuellen Gewindegang. Der Drehwinkel ist mit der Gewindesteigung zu multiplizieren, und zur Bestimmung der Ruderstellung ist das Übertragungsverhalten der Schubstange 72 auf die Ruderwelle 18 zu berücksichtigen. Der Rotationssensor 84 ist ein Absolutwinkelsensor, wodurch eine Kommutierung ohne Initialisierung möglich ist.

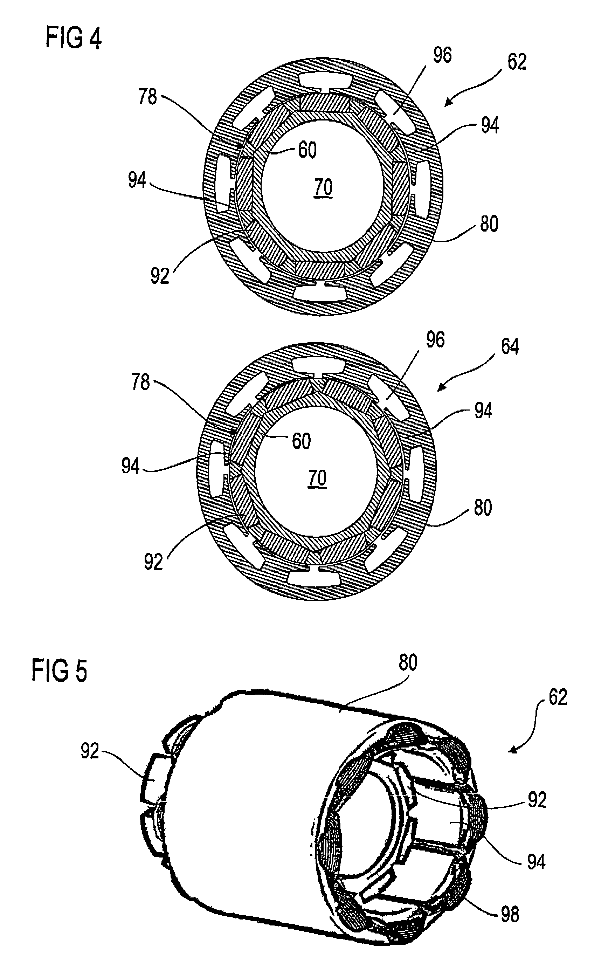

FIG 4 zeigt in ihrem oberen Teil einen Querschnitt durch die Motoreinheit 62 mit ihrem Ständer 80, ihrem Läufer 78 und das den Innenraum 70 bildende tubusförmige Innengehäuse bzw. Welle 60. Auf die Darstellung der Spindel 46 wurde in FIG 4 verzichtet. Der untere Teil aus FIG 4 zeigt den analogen Querschnitt durch die Motoreinheit 64. Deren Ständer 80 und Läufer 78 sind identische Bauteile, wie in der Motoreinheit 62, weshalb diese Bauteile mit den gleichen Bezugszeichen versehen sind, auch wenn es sich nur um die gleichen, nicht aber um die selben Bauteile handelt.

Beide Läufer 78 sind mit jeweils acht Permanentmagneten 92 bestückt, die nach radial außen weisen und abwechselnd entgegengesetzt magnetisiert sind. Jeder der Permanentmagnete 92 bildet einen Permanentmagnetpol, wobei zwei Permanentmagnete 92 jeweils ein Polpaar bilden. Entsprechend weisen die beiden Läufer 78 vier Polpaare und acht Magnetpole aus Permanentmagneten aus.

Beide Ständer 80 sind mit acht Polschuhen 94 und mit entsprechend acht Nuten 96 zwischen den Polschuhen 94 ausgeführt. In den Nuten 96 beziehungsweise um die Polschuhe 94 sind Wicklungen angeordnet, die in FIG 4 der Übersichtlichkeit halber nicht dargestellt sind. Die Permanentmagnete 92, Polschuhe 94 und Nuten 96 sind jeweils parallel zur Spindelachse 44 ausgerichtet und somit auch parallel zueinander.

Die beiden Darstellungen aus FIG 4 zeigen die beiden Motoreinheiten 62, 64 zu einem Zeitpunkt, in dem zu sehen ist, dass durch die starre Kopplung der Läufer 78 über das Innengehäuse die Läufer 78 der beiden Motoreinheiten 62, 64 um ein Viertel Polpaarteilung versetzt zueinander angeordnet sind. Während in der Motoreinheit 62 die Permanentmagnete 92 gegenüber und symmetrisch zu den Nuten 96 angeordnet sind, sind die Permanentmagnete 92 der Motoreinheit 64 genau gegenüber und mittig zu den Polschuhen 94 angeordnet. Bei der achtpoligen Aufteilung der Motoreinheiten 62, 64 sind die Läufer 78 also 22,5 Grad versetzt zueinander zum Ständer 80 angeordnet.

Die Polschuhe 94 und die Permanentmagnete 92 sind in ihrer Geometrie und Größe so zueinander angelegt, dass ihr Reluktanzmoment bei einer Drehung des Läufers 78 gegenüber dem unbestromten Ständer 80 sinusförmig verläuft. Da alle Permanentmagnete 92 jeweils einer Nut 96 im Ständer 80 fluchtend gegenüberliegen, entsteht also ein sehr starkes Nutrastmoment, da die sinusförmigen Reluktanzmomente aller Permanentmagnete 92 in Phase liegen. Entsprechend wäre die Motoreinheit 62 alleine nicht betreibbar, da Läufer 78 und Ständer 80 in einer wie im unteren Teil der FIG 4 gezeigten Relativstellung zueinander verharren würden. Das gleiche gilt für die Motoreinheit 64. Allerdings sind die sinusförmigen Verläufe der Reluktanzmomente der beiden Motoreinheiten 62, 64 exakt gespiegelt zueinander, so dass sie gegeneinander wirken. Durch die genaue Gegenphase und den Sinus-Verlauf verschwindet das Gesamt-Reluktanzmoment, sodass beide miteinander verbundenen Läufer 78 in ihrer Gesamtheit sehr ruhig laufen.

FIG 5 zeigt die Motoreinheit 62 in einer perspektivischen Darstellung, wobei jedoch der Läufer 78 der besseren Darstellung wegen ein Stück weit nach hinten aus dem Ständer 80 herausgerückt dargestellt ist, was natürlich bei einem Betrieb der Motoreinheit 62 nicht der Fall ist. Ebenfalls dargestellt ist die Wicklung 98 im Ständer 80, die im gezeigten Ausführungsbeispiel als Einzelpolwicklung ausgeführt ist. Jeder Pol trägt also eine eigene Wicklung 98, die ausschließlich um jeweils einen Polschuh 94 herumgewickelt ist.

Durch die Einzelpolwicklung kann das Herstellen des Ständers 80 sehr einfach erfolgen, da jede Wicklung nur um jeweils eine Polschuh 94 gelegt werden muss und nicht um mehrere Polschuhe 94, beispielsweise drei Polschuhe wie in normalen Gleichstrommotoren üblich. Auch sind die Wickelköpfe viel kompakter ausgeführt und viel einfacher zu formen, da jeder Wickelkopfteil eines Polschuhs einzeln ist und nicht mit anderen Wickelkopfteilen verbunden ist.

Jede der acht Wicklungen 98 wird von der Steuereinheit 90 im Betrieb des Motors 66 parallel angesteuert. Alle Wicklungen 98 werden also gleichphasig betrieben und mit gleicher Spannung beaufschlagt. Das Gleiche gilt für die Motoreinheit 64, wobei die Steuereinheit 90 diese Motoreinheit 64 jedoch zeitlich bzw. in der Phase versetzt zu der Motoreinheit 62 ansteuert. Auch die Ansteuerung der Motoreinheit 64 erfolgt einphasig, jedoch abwechselnd mit der Motoreinheit 62. Es wird also zunächst die Motoreinheit 62 einphasig angesteuert, dann pausiert und in der Pause die Motoreinheit 64 angesteuert. In einer Ansteuerungspause der Motoreinheit 64 wird wiederum die Motoreinheit 62 angesteuert. Es ist auch möglich, die jeweils einphasige Ansteuerung zeitlich überlappen zu lassen. Beides entspricht in der Gesamtheit einer zweiphasigen Ansteuerung des Motors 66, wobei die beiden Phasen jedoch getrennt auf die beiden Motoreinheiten 62, 64 verlegt sind.

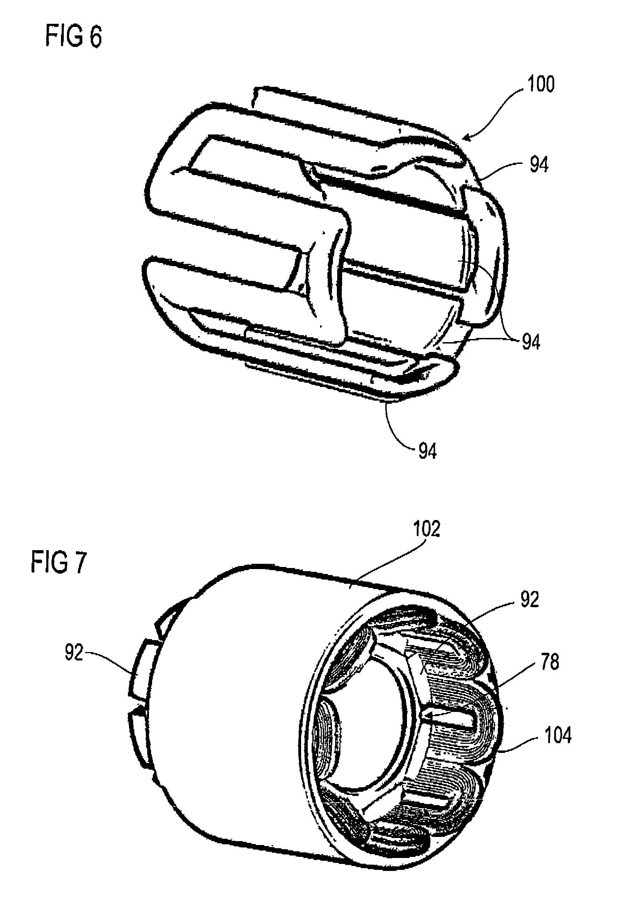

Eine alternative Wicklungsgestaltung ist in FIG 6 dargestellt. FIG 6 zeigt eine Mäanderwicklung 100, die um sämtliche acht Polschuhe 94 herumgeführt ist, wobei in FIG 6 der Übersichtlichkeit halber nur vier der acht Polschuhe 94 dargestellt sind. Die Mäanderwicklung 100 ist nur teilweise um die Polschuhe 94 geführt, wodurch der magnetische Fluss etwas geringer ist und damit auch die Leistung des Motors 66. Allerdings ist die Herstellung eines entsprechenden Motors 66 durch die Möglichkeit des Einschiebens der Mäanderwicklung zwischen dem Polschuh 94 sehr einfach und damit kostengünstig. Bei einem entsprechenden Motor 66 sind zweckmäßigerweise beide Motoreinheiten 62, 64 mit einer identischen Mäanderwicklung versehen, sodass sich die Motormomente der beiden Motoreinheiten 62, 64 identisch ergänzen.

Eine ebenfalls sehr einfache Herstellungsmöglichkeit ist in FIG 7 dargestellt. FIG 7 zeigt einen alternativen Ständer 102 um einen Läufer 78 wie in FIG 4 dargestellt. Der Ständer 102 ist polschuhlos ausgeführt, sodass jede einen Wicklungspol bildende Wicklung 104 nicht um einen Polschuh 94, sondern um einen Hohlraum herum geführt ist. Bei dem in FIG 7 gezeigten Ausführungsbeispiel ist der Ständer 102 mit einer äußeren röhrenförmigen ferromagnetischen Einheit versehen, die durch ihre Rotationssymmetrie im Wesentlichen keine Reluktanzmomente erzeugt. Auch dies führt zu einer etwas reduzierten Motorleistung, die jedoch insbesondere bei einfachen Motoren in Kauf genommen werden kann, da der Vorteil einer deutlich höheren automatischen Vorfertigung zu erheblichen Kostenreduzierungen bei der Wicklung führen kann.

Bei allen gezeigten Ausführungsbeispielen können die Läufer 78 der beiden Motoreinheiten 62, 64 gleich ausgeführt sein. Lediglich die Wicklungen 98, 100, 104 können unterschiedlich ausgeführt sein, ebenso wie die Ständer 80, 102. Bei dem in FIG 7 gezeigten Ausführungsbeispiel ist die Wicklung 104 zwar eine Einzelpolwicklung, es sind jedoch auch andere Wicklungsformen denkbar. Allen Ausführungsbeispielen ist jedoch gemein, dass die Wicklungen 98, 100, 104 jeweils einpolig von der Steuereinheit 90 angesteuert werden. Bei zwei Motoreinheiten erfolgt die Ansteuerung entsprechend versetzt zweiphasig.

### Bezugszeichenliste

- 2: Lenkflugkörper
- 4: Suchkopf
- 6: Wirkteil
- 8: Raketentriebwerk
- 10: Lenksystem
- 12: Lenkffügel
- 14: Aktuator
- 16: Aktionseinheit
- 18: Welle
- 20: Aufnahme
- 22: Element
- 24: Flugkörpergehäuse
- 26: Hebel
- 28: Ansteuerelement
- 30: Gehäuse
- 32: Drehlager
- 34: Gehäuseteil
- 36: Gehäuseteil
- 38: Befestigungsmittel
- 40: Haltehebei
- 42: Drehachse
- 44: Spindelachse
- 46: Spindel
- 48: Kugel
- 50: Spindelmutter
- 52: Lagereinheit
- 54: Lagereinheit
- 56: Spindellagerung
- 58: Gehäuseversteifung
- 60: Welle
- 62: Motoreinheit
- 64: Motoreinheit
- 66: Gleichstrommotor
- 68: Innenraum
- 70: Innenraum
- 72: Schubstange
- 74: Ankopplung
- 76: Gleitlager
- 78: Läufer
- 80: Ständer
- 82: Lagerelement
- 84: Rotationssensor
- 86: Winkelgeber
- 88: Winkelabtaster
- 90: Steuereinheit
- 92: Permanentmagnet
- 94: Polschuh
- 96: Nut
- 98: Wicklung
- 100: Mäanderwicklung
- 102: Ständer
- 104: Wicklung

## Patentansprüche

1. Aktuator (14) mit einer Welle (60) und einem mit der Welle (60) verbundenen permanent erregten, bürstenlosen Gleichstrommotor (66) zum rotatorischen Antrieb der Welle (60) relativ zu einer Außeneirlheit,
**dadurch gekennzeichnet,**
**dass** der Gleichstrommotor (66) zwei mit der Welle (60) verbundene Motoreinheiten (62, 64) mit jeweils einem Läufer (78) mit Permanentmagneten (92) aufweist und bei beiden Motoreinheiten (62, 64) die Anzahl der Permanentmagnetpole gleich der Anzahl der Wicklungspole im Ständer (80, 102) ist.

2. Aktuator (14) nach Anspruch 1,
**dadurch gekennzeichnet,**
**dass** die Motoreinheiten (62, 64) identisch aufgeführt sind und alle Permanentmagnete (92) einer der Motoreinheiten (62, 64) jeweils einer Nut (96) im Ständer (80, 102) fluchtend gegenüber liegen.

3. Aktuator (14) nach Anspruch 1 oder 2,
**dadurch gekennzeichnet,**
**dass** die Läufer (78) der beiden Motoreinheiten (62, 64) 1/4 Polpaarteilung versetzt zueinander angeordnet sind.

4. Aktuator (14) nach einem der vorhergehenden Ansprüche,
**dadurch gekennzeichnet,**
**dass** der Gleichstrommotor (66) ein Zweiphasenmotor ist und die beiden Motoreinheiten (62, 64) jeweils nur ein einphasige Wicklungssystem aufweisen.

5. Aktuator (14) nach einem der vorhergehenden Ansprüche,
**dadurch gekennzeichnet,**
**dass** der Gleichstrommotor (66) eine Steuereinheit (90) aufweist, die dazu vorbereitet ist, die beiden Motoreinheiten (62, 64) abwechselnd aus jeweils einer Phase anzusteuern.

6. Aktuator (14) nach einem der vorhergehenden Ansprüche,
**dadurch gekennzeichnet,**
**dass** die Motoreinheiten (62, 64) so aufeinander abgestimmt sind, dass ihre Reluktanzmomente bei unbestromten Ständern (80, 102) gegeneinander wirken.

7. Aktuator (14) nach einem der vorhergehenden Ansprüche,
**dadurch gekennzeichnet,**
**dass** die Reluktanzmomente der beiden Motoreinheiten (62, 64) zumindest im Wesentlichen sinusförmig verlaufen.

8. Aktuator (14) nach einem der vorhergehenden Ansprüche,
**dadurch gekennzeichnet,**
**dass** die Wicklungen (98, 100, 104) der Ständer (78) der beiden Motoreinheiten (62, 64) Einzelpolwicklungen sind.

9. Aktuator (14) nach einem der vorhergehenden Ansprüche,
**dadurch gekennzeichnet,**
**dass** die Ständer (102) polschuhlose Ständer (102) sind.

10. Aktuator (14) nach einem der vorhergehenden Ansprüche,
**dadurch gekennzeichnet,**
**dass** die Ständer (80) der beiden Motoreinheiten (62, 64) jeweils eine Mäanderwicklung (100) aufweisen, die entlang aller Polschuhe (94) des Ständers (80) geführt ist.

11. Aktuator (14) nach einem der vorhergehenden Ansprüche,
**dadurch gekennzeichnet,**
**dass** die Welle (60) eine Hohlwelle ist.

12. Aktuator (14) nach einem der vorhergehenden Ansprüche,
**dadurch gekennzeichnet,**
**dass** Welle (60) von einem Radiallager in einem Gehäuse (30) gelagert ist und das Radiallager zwischen den Motoreinheiten (62, 64) angeordnet ist.

13. Aktuator (14) nach einem der vorhergehenden Ansprüche,
**gekennzeichnet**
**durch** seine Ausführung als Spindelaktuator mit einem Gehäuse (30), einer axial beweglichen Spindel (46) und einer axial gehäusefesten Spindelmutter (50).

14. Verfahren zum Betreiben eines Aktuators (14) mit einer Welle (60) und einem permanenterregten bürstenlosen Gleichstrommotor (66), bei dem der Gleichstrommotor (66) von einer Steuereinheit (90) kommutiert wird und die Welle (60) relativ zu einer Außeneinheit rotatorisch antreibt,
**dadurch gekennzeichnet,**
**dass** die Steuereinheit (90) die Wicklungen (98, 100, 104) von zwei an der Welle (60) befestigten und zusammenwirkenden Motoreinheiten (62, 64) des Gleichstrommotors (66) abwechselnd aus nur je einer Phase ansteuert.

15. Verfahren nach Anspruch 14,
**dadurch gekennzeichnet,**
**dass** die Motoreinheiten (62, 64) sensorgesteuert kommutiert werden und die Welle (60) eine Hohlwelle ist, die an einem Ende einen Rotationssensor (84) trägt, der die Drehposition der Welle (60) abtastet und das Ergebnis an die Steuereinheit (90) gibt.
